(19) Europäisches Patentamt
European Patent Office
Office européen des brevets

(11) Publication number: **0 059 540**
**A1**

(12) # EUROPEAN PATENT APPLICATION

(21) Application number: 82300620.0

(22) Date of filing: 09.02.82

(51) Int. Cl.[3]: C 01 B 33/28
B 01 J 29/28

(30) Priority: 09.02.81 US 232617

(43) Date of publication of application:
08.09.82 Bulletin 82/36

(84) Designated Contracting States:
BE DE FR GB IT NL

(71) Applicant: MOBIL OIL CORPORATION
150 East 42nd Street
New York New York 10017(US)

(72) Inventor: Calvert, Robert Bruce
5106 Hunters Glen Road
Plainsboro New Jersey(US)

(72) Inventor: Rollmann, Louis Deane
3 Dorann Avenue
Princeton New Jersey(US)

(74) Representative: Cooper, John Anthony et al,
Mobil Court 3 Clements Inn
London WC2A 2EB(GB)

(54) **Process for producing zeolites.**

(57) A process for making ZSM-5 type zeolites and other tectosilicates, in which a $SiO_2$ sol is used as a source of silicon rather than the conventional sodium silicate solution or solid silicas, resulting in a less viscous crystallizing medium and a higher production rate for ZSM-5 type catalysts.

The mole ratio $H_2O/SiO_2$ in the reaction mixture is between 5 and 20.

EP 0 059 540 A1

TITLE MODIFIED
see front page

IMPROVED ZSM-5 PRODUCTION

This invention is directed to crystalline aluminosilicate zeolites and to an improved method of their synthesis. A more particular aspect is directed to a modification of the normal process of producing ZSM-5 aluminosilicates and other tectosilicates wherein the source of silicon is obtained from a silicon dioxide sol rather than from the conventional sodium silicate solution or from solid silicas.

Zeolites and in particular aluminosilicate zeolites and other tectosilicates are well known in the art. Since they have proven highly useful for a variety of purposes, they have been the subject of intensive investigation to improve the methods of producing them. ZSM-5 type alumino silicates include ZSM-5 and ZSM-11 which are respectively described in U.S. Patent Nos. 3,702,886 and 3,709,979. Also, U.S. Patent Nos. 4,088,605 and 4,148,718 as well are fully incorporated herein as disclosing conventional means of synthesizing ZSM-5 type zeolites.

In accordance with the invention there is provided a process for making ZSM-5 type zeolites in which a $SiO_2$ sol is used as a source of $SiO_2$ rather than the conventional sodium silicate solution or silica solids. The result is a less viscous crystallizing medium even when component concentrations are higher and an enhanced crystallization rate. The combination of low viscosity, high concentrations, and substantial reactive surface areas result in inter alia significantly higher production rates for the zeolites.

The zeolites which may achieve enhanced production by the method disclosed herein are as stated hereinabove ZSM-5 type zeolites. They have proven useful in cracking and hydrocracking processes and are outstandingly useful in other petroleum refining processes utilizing the unique catalytic characteristics of this

family of zeolites. The latter processes include isomerization of normal paraffins and naphthenes, polymerization of compounds containing an olefinic or acetylenic carbon to carbon linkage such as isobutylene and butene-1, reforming, alkylation, isomerization of polyalkyl substituted aromatics, e.g., ortho xylene, aromatics alkylation, such as reaction of benzene or toluene with ethylene, disproportionation of aromatics such as toluene to provide a mixture of benzene, xylenes and higher methylbenzenes, as well as conversion of polar compounds such as methanol to hydrocarbon products. They have exceptional high selectivity and under the conditions of hydrocarbon conversion provide a high percentage of desired products relative to total products compared with known zeolite hydrocarbon conversion. Although many materials are used as silica sources and are disclosed in the various patents on ZSM-5 disclosed hereinabove and others, commercial manufacture, however, has been restricted to a low molecular weight silicate source known as Q-brand. The stiff gels which result therefrom often restrict productivity to reaction mixtures of less than 10% solids. Since zeolite crystallization requires a structural rearrangement of silica species, it was surprising to find enhanced rates of crystallization and higher solids content when a polymeric silica source (silica sol) was used in the crystallization process. Furthermore, the physical properties of the gels as a result of the process embodied herein are such as to permit crystallization at even 20-25% solids content.

An important characteristic of the crystal structure of this class of zeolites is that it provides constrained access to, and egress from, the intra-crystalline free space by virtue of having a pore dimension greater than about 5 Angstroms and pore windows of about a size such as would be provided by 10-membered rings of oxygen atoms. It is to be understood, of course, that these rings are those formed by the regular disposition of the tetrahedra making up the anionic framework of the crystalline

aluminosilicate, the oxygen atoms themselves being bonded to the silicon or aluminum atoms at the centers of the tetrahedra. Briefly, the preferred type of zeolite useful in this invention possess, in combination: a silica to alumina ratio of at least about 12; and a structure providing constrained access to the crystalline free space.

The silica to alumina ratio referred to may be determined by conventional analysis. The type zeolites manufactured in accordance with the process disclosed herein freely sorb normal hexane and have a pore dimension greater than about 5 Angstroms. In addition, the structure provides constrained access to larger molecules. It is sometimes possible to judge from a known crystal structure whether such constrained access exists. Rather than attempt to judge from crystal structure whether or not a catalyst possesses the necessary constrained access, a simple determination of the "constraint index" may be made by passing continuously a mixture of an equal weight of normal hexane and 3-methylpentane over a small sample, approximately 1 gram or less, of zeolite at atmospheric pressure according to the following procedure. A sample of the catalyst, in the form of pellets or extrudate, is crushed to a particle size about that of coarse sand and mounted in a glass tube. Prior to testing, the catalyst is treated with a stream of air at 1000°F for at least 15 minutes. The catalyst is then flushed with helium and the temperature adjusted between 550 and 950°F to give an overall conversion between 10% and 60%. The mixture of hycrocarbons is passed at 1 liquid hourly space velocity (LHSV), that is, 1 volume of liquid hydrocarbon per volume of catalyst per hour over the catalyst with a helium dilution to give a helium to total hydrocarbon mole ratio of 4:1. After 20 minutes on stream, a sample of the effluent is taken and analyzed, most conveniently by gas chromatography, to determine the fraction remaining unchanged for each of the two hydrocarbons.

The "constraint index" is then calculated as follows:

$$\text{Constraint Index} = \frac{\log_{10}(\text{fraction of n-hexane remaining})}{\log_{10}(\text{fraction of 3-methylpentane remaining})}$$

The constraint index approximates the ratio of the cracking rate constants for the two hydrocarbons. Zeolites which can be manufactured to exhibit the above-described characteristics in an enhanced manner include ZSM-5, ZSM-11, ZSM-12, ZSM-35 and ZSM-38. It is recognized that this list is not all inclusive, but merely includes some of the eminently suitable zeolites which may be manufactured in an improved manner according to the enhanced process disclosed herein. These zeolites may also be base exchanged, contain ammonium ions, hydrogen or be impregnated to contain a cation component. Useful metal cations include Co, Co/Mo, Zn, Zn/Pd, Ni, Ni/Mo, Pd or generally speaking any metal from Groups II or VIII of the Periodic Table.

Generally speaking, the improved process of this invention incorporates the use of a 30% silica sol in place of the standard commercial Q-brand sodium silicate but sols typically ranging from 20 to 40% silica may equally well be used. The reaction conditions and other process parameters are conventional. The critical item wherein the improved results of this process are achieved is in the use of a silica sol as a source of the silicon rather than the conventional sodium silicate.

Mole ratios of $H_2O/SiO_2$ of 20 to 50 or above are conventional in current practice. Lower ratios of less than 20 to as low as about 5 are practical with the silica sols as embodied in the present invention.

The following examples disclosed below are intended merely to be exemplary and not as limitations on the scope of this invention.

## EXAMPLE 1

This example demonstrates crystallization of ZSM-5 from a reaction mixture having 20% solids content, i.e., final zeolite content.

To a solution of 0.8g $NaAlO_2$ and 1.1g NaOH in 12.2g $H_2O$ was added to a solution of 6.6 TPABr in 50g 30% silica sol. The resultant mixture was stirred at 160°C for 5 hours in an autoclave. Its composition is described by the following mole ratios of components:

| | | |
|---|---|---|
| $SiO_2/Al_2O_3$ | = | 80 |
| $H_2O/SiO_2$ | = | 10 |
| $OH/SiO_2$ | = | 0.11 |
| $Na/SiO_2$ | = | 0.14 |
| $TPA/SiO_2$ | = | 0.09 |

From this experiment 13.7g of ZSM-5 was recovered, corresponding to 19.3% of the weight of materials added. When an analogous mixture was prepared using commercially obtained sodium silicate at a $H_2O/SiO_2$ ratio of 10, stirring was impeded and the crystallization failed.

## EXAMPLE 2

This example demonstrates rate advantages with $SiO_2$ sol, as compared with commercially obtained sodium silicate. The stiff gels characteristic of the latter forced comparison to be made at a lower solids content than evisioned in this invention. Reaction mixtures were prepared as in Example 1 except that the $H_2O/SiO_2$ ratio was 20. In 2 hours at 160°C crystallization was complete with silica sol; 4 hours were required with the commercial sodium silicate.

It can readily be seen from the examples disclosed above that the method of this invention results in improved ZSM-5 production resulting in a less viscous crystallizing medium wherein the combination of low viscosity and high concentrations result in higher production rates, demonstrated by improved rates of crystallinity and higher solids content, for ZSM-5 type crystalline aluminosilicates.

CLAIMS:

1. A method of synthesising a zeolite having a constraint index of 1 to 12 from an aqueous reaction mixture containing a source of silica together with sources of organic cations, alkali metal cations and/or alumina characterised in that the source of silica is a 20 to 40% wt. solids silica sol and that the mole ratio $H_2O/SiO_2$ in the reaction mixture is between 5 and 20.

2. The method of claim 1 wherein the $H_2O/SiO_2$ mole ratio is between 10 and 15.

3. The method of claim 1 wherein at least about a 30 wt. % solution of $SiO_2$ sol is used as the source of $SiO_2$.

4. The method of claim 1 wherein the ZSM-5 zeolite type catalysts are selected from ZSM-5, ZSM-11, ZSM-12, ZSM-35 and ZSM-38.

5. The method of claim 4 wherein the zeolite catalyst prepared is ZSM-5.

6. The method of claim 4 wherein the catalysts may be base exchanged, contain ammonium ions, hydrogen or metal cations selected from Group II or Group VIII of the Periodic Table.

European Patent Office

# EUROPEAN SEARCH REPORT

0059540

Application number

EP 82 30 0620

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,X | US-A-3 702 886 (R.J.ARGAUER et al.) *Examples 24,26 and 27* --- | 1,3,4,5 | C 01 B 33/28<br>B 01 J 29/28 |
| X | DE-A-2 049 755 (MOBIL OIL CORP.) *Examples 1-6 and table III* & GB - A - 1 334 243 --- | 1,2,3 | |
| X | FR-A-2 130 429 (MOBIL OIL CORP.) *Examples 1-7* & US - A - 3 832 449 --- | 1,2,3,4 | |
| X | US-A-4 016 245 (C.J.PLANK et al.) *Example 1, table 4; example 15 and table 5; example 22* --- | 1,4 | TECHNICAL FIELDS SEARCHED (Int. Cl. ³) |
| X | US-A-4 046 859 (C.J.PLANK et al.) *Example 7, table 2; examples 13 and 14, table 3; example 19 and table 4; example 31* --- | 1,4 | C 01 B 33/00 |
| X | FR-A-2 130 430 (MOBIL OIL CORP.) *Examples 1,2,4-6,8,9* & DE - A - 2 212 810 & GB - A - 1 365 318 ----- | 1,2,3,4,5 | |

The present search report has been drawn up for all claims

| Place of search | Date of completion of the search | Examiner |
|---|---|---|
| THE HAGUE | 26-05-1982 | BREBION J.CH. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82